# EUROPÄISCHE PATENTANMELDUNG

(11) **EP 1 319 343 A2**
(43) Veröffentlichungstag der Anmeldung: **18.06.2003**
(21) Anmeldenummer: 02023265.8
(22) Anmeldetag: 17.10.2002
(51) Int. Cl.: A22C 7/00

(54) **Verfahren zur Herstellen von Fleischportionen**

(30) Priorität: 14.12.2001 DE 10164637
(71) Anmelder: Nienstedt GmbH, 45721 Haltern (DE)
(72) Erfinder: Groneberg-Nienstedt, Petra, 45721 Haltern (DE); Rosenberger, Jörg, 48734 Reken (DE)
(74) Vertreter: COHAUSZ DAWIDOWICZ HANNIG & PARTNER

(57) **Zusammenfassung**

Die Erfindung betrifft ein Verfahren zum Herstellen form- und massegleicher Fleischportionen durch Pressen von gefrorenem Fleisch in einer Form zu einer gerundeten Endform. Ein seine natürliche Form aufweisendes einzelnes Fleischstück, an dem keine weiteren Fleischstücke haften, wird im gefrorenen oder nicht gefrorenen Zustand so weit beschnitten, bis es ein gewünschtes Gewicht und vorzugsweise eine gewünschte Rohform (Vorform) aufweist und dann im gefrorenen Zustand in die Form gelegt und in der Form zur Endform gepresst wird.

## Beschreibung

Die Erfindung betrifft ein Verfahren zum Herstellen form- und massegleicher Fleischportionen durch Pressen von gefrorenem Fleisch in einer Form zu einer gerundeten Endform.

Hierbei wird unter dem Wort "Fleisch" nicht nur beliebiges tierisches Fleisch wie Geflügel, Rind, Schwein oder Lamm, sondern auch das Fleisch von Fisch verstanden.

Die Lebensmittelindustrie wünscht Fleisch in homogenen ganzen Stücken, die sich neben Massengleichheit durch Formidentität auszeichnen. Dadurch haben diese Stücke gleichartige Dicken und Querschnitte, die automatisches Garen mit identischen Garzeiten ermöglichen. Gleichzeitig ist es von Vorteil, die Form so zu gestalten, dass die Fleischstücke beim Servieren groß wirken, das heißt einen möglichst großen Querschnitt aufweisen.

Es ist bekannt, aus gefrorenen Blöcken, die eine Vielzahl von Fleischstücken enthalten, quaderförmige Stücke zu sägen und diese in gefrorenem Zustand in eine Form zu legen und dort zu pressen. Aufgrund der Quaderform ist es beim Pressen erforderlich, eine sehr starke Umformung zu erzeugen, um ein gerundetes Endstück zu erhalten, das einem natürlichen Fleischstück ähnlich sieht. Es kommt zu solch starken Verschiebungen der Muskelfasern, dass die Faserstruktur nicht genügend erhalten bleibt.

Aufgabe der Erfindung ist es, massegleiche Fleischportionen unterschiedlicher Ausgangsformen in massen gleiche formidentische und formstabile Fleischstücke zu transformieren und hierbei die Faserstrukturen weitgehend zu erhalten.

Diese Aufgabe wird erfindungsgemäß dadurch gelöst, dass ein seine natürliche Form aufweisendes einzelnes Fleischstück, an dem keine weiteren Fleischstücke haften, im gefrorenen oder nicht gefrorenen Zustand so weit beschnitten wird, bis es ein gewünschtes Gewicht und vorzugsweise eine gewünschte Rohform (Vorform) aufweist und dann im gefrorenen Zustand in die Form gelegt und in der Form zur Endform gepresst wird.

Die auf solche Weise erhaltenen Fleischportionen haben stets dieselbe Form und Masse und das gleiche Gewicht. Die Muskelfaserstrukturen sind weitgehend erhalten, so dass der Biss in solche Fleischstücke dem natürlicher Fleischstücke entspricht. Aufgrund der stets selben Dicken und Querschnitte sind die Garzeiten stets gleichbleibend und ferner können Formen gewählt werden, die Fleischportionen beim Servieren groß wirken lassen, das heißt sie weisen einen verhältnismäßig großen Querschnitt auf. Die Form kann prinzipiell beliebig vorgewählt werden.

Vorzugsweise wird vorgeschlagen, dass in die Form mindestens ein weiteres gefrorenes Fleischstück, an dem keine weiteren Fleischstücke haften, gelegt wird, und alle Fleischstücke in der Form zur Endform gepresst werden, in der alle Fleischstücke miteinander verbunden sind, so dass auch kleinere Fleischstücke verwertet werden können.

Vorzugsweise wird vorgeschlagen, dass die Fleischstücke beim Einlegen in die Form eine Temperatur von -5°C bis -20°C aufweisen. Besonders vorteilhaft ist es, dass die Fleischstücke vor dem Pressen und/oder Beschneiden in Tumblern und/oder durch Einlegen in Soßen oder Marinaden oder Gewürzen oder durch Injizieren vorbehandelt werden. Eine solche Vorbehandlung ist bei Fleischstücken, die aus gefrorenen Blöcken herausgesägt werden, nicht möglich.

Ausführungsbeispiele des erfindungsgemäßen Verfahrens werden im folgenden näher beschrieben.

Ein Muskel-Fleischstück eines Tieres insbesondere von Geflügel, Rind, Schwein, Lamm oder Fisch wird in seiner natürlichen Form eingefroren. Unter der "natürlichen Form" wird verstanden, dass das Fleischstück nicht durch Pressen, Schneiden oder Sägen so weit verändert wurde, dass die vom Muskel vorgegebene Form nicht mehr erkennbar ist. Eine solche nicht mehr erkennbare Form wird zum Beispiel dann geschaffen, wenn aus einem gefrorenen Fleischblock quaderförmige Stücke herausgesägt werden.

Das tiefgefrorene Fleischstück wird in die Mulde einer Pressform gelegt, die eine größere Länge als Breite und eine geringe Höhe als Breite besitzt, wobei die Ecken abgerundet sind und ein Ende der länglichen Form eine andere Rundungsform besitzt als das gegenüberliegende Ende. Damit hat die Mulde etwa die natürliche Form eines Muskel-Fleischstückes mit leicht gewölbter Oberund Unterseite.

Nachdem das Fleischstück in die Form gelegt wurde, wird von oben ein Stempel in die Form gedrückt und damit auf das Fleisch ein Druck ausgeübt, der das Fleischmaterial in seinem gefrorenen Zustand so weit presst, dass das Fleischmaterial die gesamte Form ausfüllt und hierbei die Muskelfasern zueinander verschoben werden. Hierbei bleibt das Endprodukt formstabil.

Die Eingangstemperatur der Fleischportionen beträgt dabei vorzugsweise -5°C bis -20°C. Das dem Verformungsprozess unter Druckanwendung zugrunde liegende Verfahren ist an sich aus den Patentschriften DE 19806391 A1 und DE 19732206 C1 bekannt. Die Beschickung der Mulden geschieht manuell oder automatisch. Das Verfahren ist nicht von der speziellen Geometrie des Eingangsmaterials, wie dies zum Beispiel bei aus Tiefkühlblöcken gesägten Rohlingen der Fall ist, abhängig. Insbesondere ist ein spezieller Vorformungsschritt in eine Form, die der gewünschten Endform ähnlich ist, nicht erforderlich. Es ist lediglich erforderlich, dass die Fleischportionen in die der Verformung dienenden Mulde in für den Prozess geeigneter Weise hineinpassen, das heißt, dass insbesondere ihr Querschnitt nicht größer als der der Mulde ist. Dies kann vorzugsweise durch geeignetes Einfrieren der Fleischportionen unter geometrischen Restriktionen (wie beispielsweise in geeigneten Behältnissen) geschehen, wobei keine Druckanwendung erforderlich sein muss. Die Eingangsware kann also unter Atmosphärendruck eingefroren werden.

Die zu verformenden Fleischportionen sind vorzugsweise ganze Stücke oder Zusammenfassungen gestückelter Ware. Sie können unbehandelt oder zubereitet (zum Beispiel gewürzt, mariniert, mit Lebensmittelzusatzstoffen versehen) bzw. vorbehandelt (zum Beispiel durch Injizieren, Bearbeitung in Tumblern) sein.

Bevor das Fleischstück in die Form gelegt wird, kann es beschnitten werden, um das gewünschte Gewicht bzw. das gewünschte Volumen zu erhalten, das für die betreffende Form erforderlich ist. In der Regel handelt es sich hierbei aber nur um wenige Schnitte am Rand des Fleischstückes. Im übrigen bleibt das Fleischstück in seiner natürlichen Muskelform.

Im folgenden wird das erfindungsgemäße Verfahren am Beispiel von Hühnerfleisch beschrieben:

Das vom Huhn gelöste frische oder gegarte Hühnerfleisch wird unbehandelt oder gewürzt als ganzes oder gestückelt auf eine Temperatur von -5°C bis -20°C eingefroren. In diesem tiefgefrorenen Zustand wird dieses Ausgangsmaterial in die Pressform gelegt.

Sollte dieses Material für die bestimmte Pressform ein zu großes Volumen haben, so wird durch Beschneiden dies korrigiert. Sollte es zu klein sein, so werden ein oder weitere tiefgefrorene Hühnerbrustteile in die Form hinzugelegt.

Danach wird ein Stempel in die Form gedrückt, dessen Unterseite leicht konkav eingewölbt sein kann, um die Oberseite des Endproduktes zu formen. Der Stempel wird so stark in die Form gepresst, dass das Fleischstück oder die Fleischstücke die Form vollständig ausfüllen. Hierbei verbinden sich die einzelnen Fleischstücke miteinander, falls mehr als ein Fleischstück in die Form gelegt wurde.

Statt Geflügelfleisch können auch andere Fleischarten insbesondere vom Rind, Schwein, Hammel oder Fisch verwendet werden.

## Patentansprüche

1. Verfahren zum Herstellen form- und massegleicher Fleischportionen durch Pressen von gefrorenem Fleisch in einer Form zu einer gerundeten Endform, **dadurch gekennzeichnet, dass** ein seine natürliche Form aufweisendes einzelnes Fleischstück, an dem keine weiteren Fleischstücke haften, im gefrorenen oder nicht gefrorenen Zustand so weit beschnitten wird, bis es ein gewünschtes Gewicht und vorzugsweise eine gewünschte Rohform (Vorform) aufweist und dann im gefrorenen Zustand in die Form gelegt und in der Form zur Endform gepresst wird.

2. Verfahren nach Anspruch 1, **dadurch gekennzeichnet, dass** in die Form mindestens ein weiteres gefrorenes Fleischstück, an dem keine weiteren Fleischstücke haften, gelegt wird, und alle Fleischstücke in der Form zur Endform gepresst werden, in der alle Fleischstücke miteinander verbunden sind.

3. Verfahren nach Anspruch 1 oder 2, **dadurch gekennzeichnet, dass** die Fleischstücke beim Einlegen in die Form eine Temperatur von -5°C bis -20°C aufweisen.

4. Verfahren nach einem der vorherigen Ansprüche, **dadurch gekennzeichnet, dass** die Fleischstücke vor dem Pressen und/oder Beschneiden in Tumblern und/oder durch Einlegen in Soßen oder Marinaden oder Gewürzen oder durch Injizieren vorbehandelt werden.
